# FASCICULE DE BREVET EUROPEEN

(11) **EP 2 350 929 B1**
(45) Date de publication et mention de la délivrance du brevet: **04.03.2015**
(21) Numéro de dépôt: 09768112.6
(22) Date de dépôt: 23.11.2009
(51) Int. Cl.: G06K 19/077, G06K 1/02

(54) **CARTE A PUCE COMPORTANT UN MODULE ELECTRONIQUE PORTE PAR UN CORPS DE CARTE POURVUE DE MOYENS D'AUTHENTIFICATION DE L'APPAIRAGE DU MODULE AVEC LE CORPS**
CHIPKARTE MIT EINEM ELEKTRONIKMODUL, DAS AUF EINEM KARTENKÖRPER GETRAGEN WIRD, DAS MIT EINEM MITTEL ZUM AUTHENTIFIZIEREN DES PEERING DES MODULS MIT DEM KÖRPER AUSGESTATTET IST
SMART CARD COMPRISING AN ELECTRONIC MODULE SUPPORTED ON A CARD BODY PROVIDED WITH A MEANS FOR AUTHENTICATING THE PEERING OF THE MODULE WITH THE BODY

(30) Priorité: 28.11.2008 FR 0806694
(43) Date de publication de la demande: 03.08.2011
(73) Titulaire: MORPHO, 92130 Issy-Les-Moulineaux (FR)
(72) Inventeur: PEPIN, Cyrille, F-78570 Andresy (FR); POMPEANI, Sylvie, F-75015 Paris (FR)
(74) Mandataire: Lavialle, Bruno François Stéphane
(86) Numéro de dépôt international: PCT/FR2009/001336
(87) Numéro de publication internationale: WO 2010/061073

(56) Documents cités:
- WO-A-02/33652
- FR-A- 2 695 234
- FR-A- 2 859 870
- US-A- 4 370 550

## Description

L'invention concerne une carte à puce comportant un corps de carte de forme plane portant un module électronique.

### ARRIERE PLAN DE L'INVENTION

D'une manière générale, une carte à puce comporte un corps en forme de carte plane à contour rectangulaire en matière plastique, et un module électronique porté par ce corps, ce module comportant un processeur associé à des moyens de mémoire ainsi que des contacts électriques affleurant à une face du corps de carte.

Une telle carte est utilisée notamment dans des applications nécessitant une sécurisation importante, comme par exemple dans les applications de type carte de paiement bancaire. Une telle carte peut aussi être utilisée pour constituer un badge d'identification, une carte de transport, ou autre, qui impliquent également une sécurisation importante.

Différentes informations sont alors imprimées sur chaque face du corps de carte, ces informations comportent généralement un hologramme, un numéro de carte et autres. D'autre part, les données mémorisées dans le module électronique sont protégées par différentes techniques de cryptage numérique.

Une fraude connue consiste à concevoir un module électronique piraté, et à le fixer à un corps de carte usagé mais authentique, de manière à disposer d'une carte bancaire frauduleuse qui a les apparences extérieures d'une carte bancaire normale.

Le fraudeur peut alors confier sa carte à un commerçant pour effectuer un paiement, le commerçant n'a alors pas la possibilité de détecter que le module électronique porté par le corps de carte est en fait piraté.

Dans ce cas, le fraudeur peut ainsi effectuer des paiements sans être inquiété par les commerçants auxquels il montre ou confie sa carte pour effectuer ces paiements.

Une autre fraude consiste à utiliser un module authentique avec un corps de carte frauduleux. Le corps de carte porte alors le nom du pirate, mais sa puce provient en fait d'une carte bancaire d'une autre personne, ce qui permet au pirate de faire des achats débités sur le compte de cette autre personne.

Le document FR 2 859 870 A divulgue une carte à puce présentant des micro perforations en périphérie des contacts pour authentifier la puce de la carte.

### OBJET DE L'INVENTION

Le but de l'invention est de proposer une solution pour remédier à cet inconvénient.

### RESUME DE L'INVENTION

A cet effet, l'invention a pour objet une carte à puce comportant un corps de carte pourvu d'une cavité, et un module électronique ayant au moins une portion présentant une épaisseur inférieure à l'épaisseur du corps de carte, le module électronique étant logé dans la cavité et solidarisé au corps de carte, caractérisé en ce qu'elle comporte au moins un trou débouchant qui traverse successivement la portion du module présentant une épaisseur inférieure à l'épaisseur du corps de carte et le corps de carte.

Avec cette solution, il est difficile pour un fraudeur de faire coïncider les trous d'un corps de carte usagé avec un module pirate. Chaque trou qui laisse passer la lumière garantit ainsi l'authenticité de l'association du module électronique avec le corps de carte, et la vérification de cette authenticité peut être effectuée par simple contrôle visuel.

L'invention concerne également une carte à puce telle que définie ci-dessus, dans laquelle le module comporte une plage de contact électrique et une unité comportant un processeur associé à des moyens de mémoire, cette unité étant rapportée à une région centrale d'une face de la plage de contact électrique, et dans lequel chaque trou débouchant traverse une portion du module correspondant à une région périphérique de la plage de contact électrique.

L'invention concerne également une carte à puce telle que définie ci-dessus, comportant plusieurs trous définissant conjointement un ou plusieurs motifs.

L'invention concerne également une carte à puce telle que définie ci-dessus, comportant une première série de motifs se rapportant au fabricant de la carte à puce et/ou une seconde série de motifs propres à l'exemplaire de la carte à puce.

L'invention concerne également une carte à puce telle que définie ci-dessus, dans laquelle chaque trou a une forme évasée présentant une section ayant des dimensions augmentant d'une extrémité à l'autre du trou.

L'invention concerne également une carte à puce telle que définie ci-dessus, comprenant au moins un trou évasé dont la section de plus faibles dimensions est située au niveau d'une première face de la carte, et au moins un autre trou évasé dont la section de plus faibles dimensions est située au niveau d'une seconde face de la carte, cette seconde face étant opposée à la première face.

L'invention concerne également une carte à puce telle que définie ci-dessus, dans laquelle chaque trou est réalisé par perforation laser.

### BREVE DESCRIPTION DES FIGURES

- La figure 1 est une vue latérale en coupe d'un module électronique pour carte à puce ;
- La figure 2 est une vue de dessus d'une plage de contact électrique d'un module électronique pour carte à puce ;
- La figure 3 est une vue latérale en coupe montrant un corps de carte à puce et un module électronique avant assemblage ;
- La figure 4 est une vue latérale en coupe montrant un corps de carte et un module électronique assemblés ;
- La figure 5 est une vue latérale en coupe montrant un corps de carte et un module électronique assemblés après réalisation d'un trou débouchant ;
- La figure 6 est une vue latérale en coupe montrant un corps de carte et un module électronique assemblés après réalisation de deux trous débouchants ;
- La figure 7 est une vue de dessus montrant une portion de corps de carte et un module électronique assemblés après réalisation de deux trous débouchants ;
- La figure 8 est une vue de dessus montrant un module électronique assemblé à un corps de carte et dans lesquels une série de trous débouchants ont été réalisés.

### DESCRIPTION DETAILLEE DE L'INVENTION

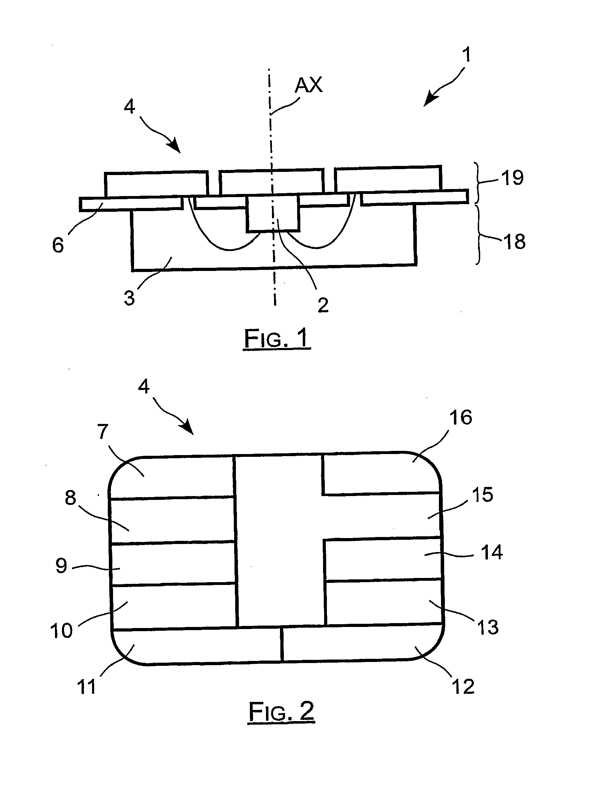

Comme visible dans la figure 1, le module électronique 1 qui constitue la puce d'une carte à puce, comporte une unité 2 incluant notamment un processeur et des moyens de mémoire, qui sont noyés dans une protection 3, ainsi qu'une plage de contact électrique 4 comportant un film support 6. L'unité 2 est rapportée à une région centrale d'une face de la plage de contact 4, et elle est électriquement reliée aux contacts de la plage de contact 4.

Comme visible dans la figure 2, la plage de contact 4 qui a un contour rectangulaire à sommets arrondis, comporte une série de dix contacts électriques ou touches, repérés par 7 à 16. Ceux-ci sont contigus et coplanaires, et ils se présentent chacun sous forme d'une plaque métallique, ces contacts ou touches étant portés par le film support 6.

Dans l'exemple de la figure 2, les touches 7 à 10 et 13 à 16 sont des contacts électriques, alors que les touches 11 et 12 ne constituent pas des contacts électriques à proprement parler, dans la mesure où elles ne sont pas connectées. L'invention s'applique d'ailleurs aussi bien à une puce comportant une plage à huit touches, comme défini par la norme ISO 7816-2.

La protection 3 et l'unité 2 sont situées dans une partie dite inférieure 18 du module 1, alors que la plage de contact 4 avec son film support 6 sont situés dans une partie dite supérieure 19, superposée à la partie inférieure 18.

Comme illustré sur les figures 1 et 2, la partie supérieure 19 a de plus grandes dimensions que la partie inférieure 18, lorsque ces parties sont vues selon un axe AX normal au plan de la plage de contact 4.

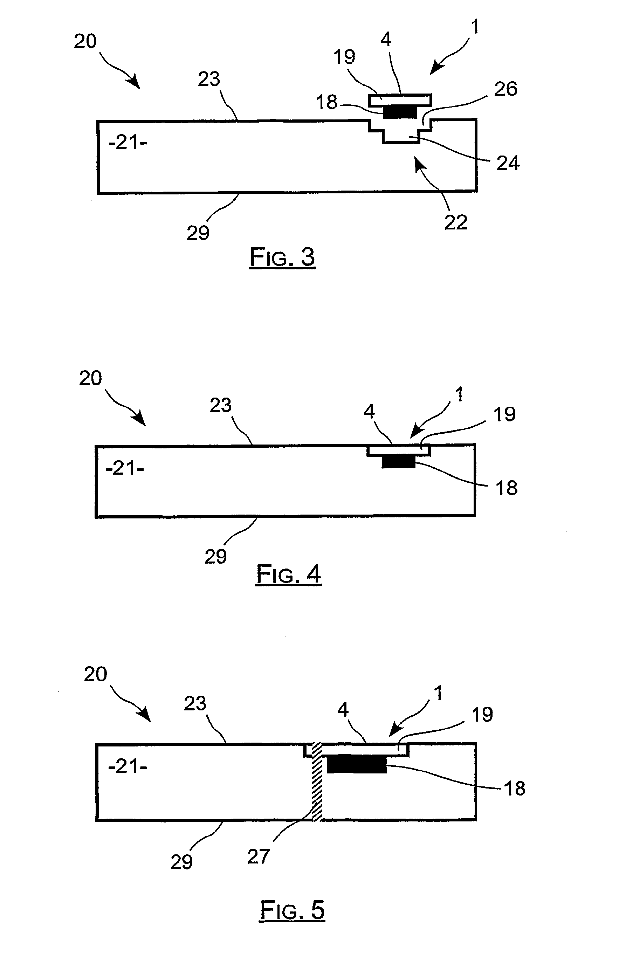

En ce qui concerne leurs épaisseurs, mesurées le long de l'axe AX, l'épaisseur de la partie supérieure 19 est inférieure à celle de la partie inférieure 18, l'épaisseur de l'ensemble du module 1 étant inférieure à l'épaisseur du corps de carte 21 auquel ce module 1 est destiné à être fixé, comme visible notamment sur la carte à puce 20 qui est représentée après assemblage dans la figure 4.

Ce corps de carte 21 comporte typiquement cinq couches superposées les unes aux autres, comprenant une couche de coeur, deux couches imprimables situées de part et d'autre de la couche de coeur, et deux couches protectrices, situées respectivement de part et d'autre des couches imprimables. Le corps de carte pourrait aussi bien comporter un nombre différent de couches.

Le module 1 est logé dans une cavité 22 réalisée à l'une des faces du corps de carte 21, ici la face supérieure 23, ce module 1 étant fixé au corps de carte 21 par exemple par collage. Cette cavité 22 qui est ici non débouchante comporte une partie supérieure 26 prolongée par une partie inférieure 24 de plus faible section.

La partie supérieure 26 est par exemple réalisée en prévoyant une ouverture au niveau de la couche supérieure protectrice de la carte, alors que la partie inférieure 24 est par exemple réalisée par fraisage.

La partie supérieure 26 de la cavité 22 a les mêmes dimensions que la partie supérieure 19 du module 1, et la partie inférieure 24 de la cavité 22 a les mêmes dimensions que la partie inférieure 18 du module 1.

Une fois en place, comme dans la figure 4, le module 1 est ainsi logé dans la cavité 22 en étant emboîté dans celle-ci, la plage de contact 4 étant alors située à affleurement de la face supérieure 23 du corps de carte 21, en s'étendant parallèlement à celle-ci.

Conformément à l'invention, un ou plusieurs trous débouchants de faible diamètre, comme les trous débouchants repérés par 27 et 28 dans les figures 5 à 7 sont réalisés après solidarisation du module 1 au corps de carte 21. Ils sont situés au niveau d'une portion du module 1 ayant une épaisseur inférieure à celle du corps de carte 21, cette portion étant ici une région périphérique de la partie supérieure 19 dans l'exemple des figures, c'est à dire une région périphérique de la plage de contact 4.

Chaque trou comporte ainsi une partie qui traverse une région périphérique de la plage de contact 4, et une partie qui traverse le corps de carte 21 dans une région correspondant à la cavité 22, en étant débouchant de manière à laisser passer la lumière.

Compte tenu des jeux fonctionnels prévus entre le module 1 et la cavité 22, il existe une incertitude du positionnement du module 1 par rapport à la cavité 22, de sorte que le fait qu'un tel trou laisse passer la lumière signifie qu'il a très probablement été réalisé après assemblage du module 1 et du corps de carte 21.

Autrement dit, ces trous constituent un lien physique authentique entre le corps de carte 21 et le module 1. Le fait qu'un trou laisse passer la lumière signifie qu'il a très probablement été réalisé par le fabricant de la carte, ce qui garantit que le module 1 est bien celui qui a été initialement appairé au corps de carte 21.

Dans le cas où un fraudeur fixerait un module piraté à un corps de carte 21 existant, l'assemblage du module piraté au corps de carte 21 donnerait lieu à un décalage de la partie de trou du module piraté par rapport à la partie de trou du corps de carte 21, de sorte que la lumière ne pourrait plus traverser.

La sensibilité de cette solution à la fraude est d'autant plus importante que le diamètre des trous débouchants est choisi petit, ce qui permet de détecter un écart de positionnement d'autant plus faible.

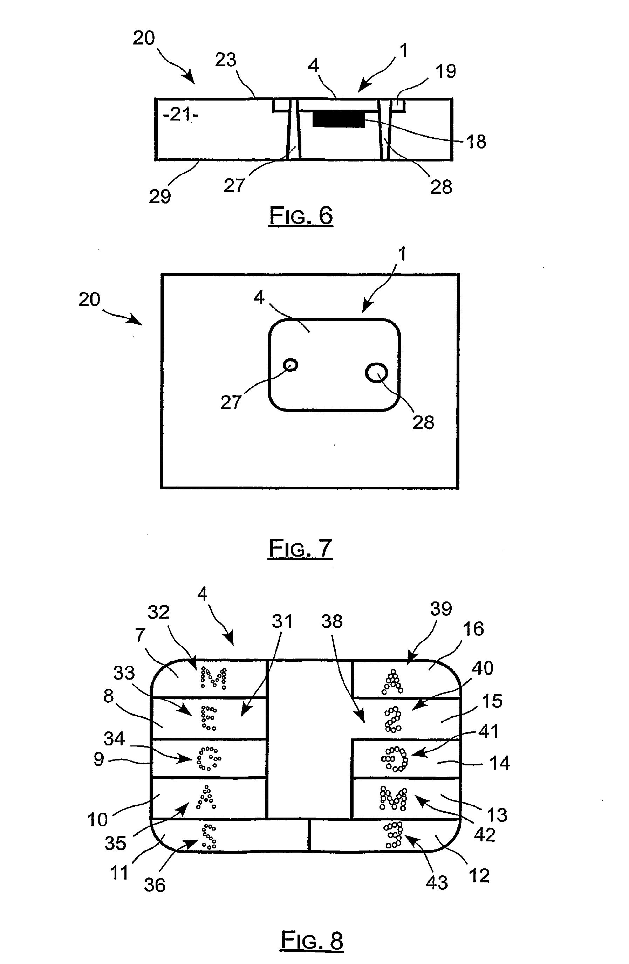

Ces trous sont avantageusement réalisés par perforation laser, ce qui leur donne une forme évasée de type tronconique, comme visible dans la vue en coupe de la figure 6, les diamètres de ces trous étant compris entre cinquante et trois cent microns.

Chaque trou présente une section de plus faibles dimensions située au niveau de la face de la carte par laquelle ce trou a été réalisé, c'est à dire au niveau de la face de la carte à laquelle a été appliqué le laser pour réaliser ce trou.

Pour tirer parti de cette forme tronconique, on réalise une première série de trous, comme le trou 27, depuis la face inférieure 29, et une autre série de trous comme le trou 28, depuis la face supérieure 23 du corps de carte 21.

Chaque trou de la première série, tel que le trou 27, a sa section de plus faibles dimensions située au niveau de la face supérieure 23. Avec cette solution, pour un fraudeur qui implante un module pirate dans un corps de carte authentique, il est très difficile, voire impossible, de réaliser dans le module une portion de trou qui soit aligné avec une portion de trou existante du corps de carte authentique.

De façon analogue, chaque trou de la seconde série, tel que le trou 28, a sa section de plus faibles dimensions située au niveau de la face inférieure 29. Il est alors à peu près impossible à un fraudeur qui implante un module authentique à un corps de carte piraté, de réaliser dans le corps de carte piraté, une partie de trou qui soit alignée avec une portion de trou existante du module authentique.

Ces séries de trous peuvent être formées de trous réalisés à des positions choisies aléatoirement. Mais avantageusement les trous ainsi formés constituent des motifs ou des symboles tels que des lettres alphabétiques, comme dans l'exemple de la figure 8, ou bien des chiffres.

Dans ce cas, une première série de trous repérée par 31 et réalisée depuis la face inférieure 29 définit cinq motifs repérés par 32 à 36, et une seconde série de trous repérée par 38 et réalisée depuis la face supérieure 23 définit cinq autres motifs repérés par 39 à 43.

Avantageusement, l'une des séries de motifs correspond au fabricant de la carte, alors que l'autre série de motifs correspond à la carte en elle-même, en représentant par exemple des informations qui sont également inscrites sur une face du corps de carte.

Dans l'exemple de la figure 8, chaque motif est formé par un ensemble de trous qui sont tous réalisés sur un même contact électrique. Ceci permet ainsi d'inscrire de façon lisible, un motif ou un symbole sur chaque contact, pour faciliter la lecture.

La vérification de l'authenticité de cette carte à puce, par exemple par un commerçant, peut ainsi être assurée par un simple contrôle visuel. Il s'agit alors de vérifier que les trous ainsi réalisés laissent passer la lumière, c'est à dire par exemple que les symboles formés par ces trous sont visibles lorsqu'on place la carte devant une source lumineuse.

Avantageusement, les symboles formés par les séries de trous sont également mémorisés dans le module électronique 1, ce qui permet de réaliser un contrôle additionnel, en vérifiant au niveau du lecteur de carte qu'une image obtenue par le lecteur en éclairant la zone perforée correspond à une image enregistrée dans la puce.

## Revendications

1. Carte à puce (20) comportant un corps de carte (21) pourvu d'une cavité (22), et un module électronique (1) ayant au moins une portion (19) présentant une épaisseur inférieure à l'épaisseur du corps de carte, le module électronique (1) étant logé dans la cavité (22) et solidarisé au corps de carte (21), **caractérisée en ce qu'**elle comporte au moins un trou débouchant (27, 28) qui comporte une partie traversant la portion (19) de module (1) présentant une épaisseur inférieure à l'épaisseur du corps de carte (21), et une partie qui traverse le corps de carte (21).

2. Carte à puce (20) selon la revendication 1, dans laquelle le module (1) comporte une plage de contact électrique (4) et une unité (2) comportant un processeur associé à des moyens de mémoire, cette unité (2) étant rapportée à une région centrale d'une face de la plage de contact électrique (4), et dans lequel chaque trou débouchant (27, 28) traverse une portion du module (1) correspondant à une région périphérique de la plage de contact électrique (4).

3. Carte à puce (20) selon la revendication 1 ou 2, comportant plusieurs trous (27, 28) définissant conjointement un ou plusieurs motifs (32-36, 39-43).

4. Carte à puce (20) selon l'une des revendications 1 à 3, comportant une première série (31) de motifs (32-36) se rapportant au fabricant de la carte à puce (20) et/ou une seconde série de motifs propres à l'exemplaire de la carte à puce (20).

5. Carte à puce (20) selon l'une des revendications précédentes, dans laquelle chaque trou (27, 28) a une forme évasée présentant une section ayant des dimensions augmentant d'une extrémité à l'autre du trou (27, 28).

6. Carte à puce (20) selon la revendication 5, comprenant au moins un trou évasé (27) dont la section de plus faibles dimensions est située au niveau d'une première face (23) de la carte (20), et au moins un autre trou évasé (28) dont la section de plus faibles dimensions est située au niveau d'une seconde face (29) de la carte (20), cette seconde face (29) étant opposée à la première face (23).

7. Carte à puce (20) selon l'une des revendications précédentes, dans laquelle chaque trou est réalisé par perforation laser.

## Patentansprüche

1. Chipkarte (20), umfassend einen Kartenkörper (21), der mit einem Hohlraum (22) versehen ist, und einen elektronischen Baustein (1), der mindestens einen Abschnitt (19) hat, der eine Dicke aufweist, die geringer als die Dicke des Kartenkörpers ist, wobei der elektronische Baustein (1) in dem Hohlraum (22) untergebracht und mit dem Kartenkörper (21) verbunden ist, **dadurch gekennzeichnet, dass** sie mindestens ein Durchgangsloch (27, 28) umfasst, das aus einem Teil besteht, der den Abschnitt (19) des Bausteins (1) durchsetzt, der eine Dicke aufweist, die geringer als die Dicke des Kartenkörpers (21) ist, sowie aus einem Teil, der den Kartenkörper (21) durchsetzt.

2. Chipkarte (20) nach Anspruch 1, wobei der Baustein (1) einen elektrischen Kontaktbereich (4) und eine Einheit (2) umfasst, die einen Prozessor enthält, der mit Speichermitteln verbunden ist, wobei diese Einheit (2) mit einem zentralen Bereich einer Seite des elektrischen Kontaktbereichs (4) verbunden ist, und wobei jedes Durchgangsloch (27, 28) einen Abschnitt des Bausteins (1) durchsetzt, der einem Randbereich des elektrischen Kontaktbereichs (4) entspricht.

3. Chipkarte (20) nach Anspruch 1 oder 2, umfassend mehrere Löcher (27, 28), die zusammen ein oder mehrere Motive (32-36, 39-43) definieren.

4. Chipkarte (20) nach einem der Ansprüche 1 bis 3, umfassend eine erste Reihe (31) von Motiven (32-36), die mit dem Hersteller der Chipkarte (20) in Zusammenhang stehen und/oder eine zweite Reihe von Motiven, die charakteristisch für das Exemplar der Chipkarte (20) sind.

5. Chipkarte (20) nach einem der vorhergehenden Ansprüche, wobei jedes Loch (27, 28) eine sich erweiternde Form hat, die einen Querschnitt mit Abmessungen aufweist, die von einem Ende des Lochs (27, 28) zum anderen Ende zunehmen.

6. Chipkarte (20) nach Anspruch 5, umfassend mindestens ein sich erweiterndes Loch (27), dessen Querschnitt mit geringeren Abmessungen sich im Bereich einer ersten Seite (23) der Karte (20) befindet, sowie mindestens ein weiteres sich erweiterndes Loch (28), dessen Querschnitt mit geringeren Abmessungen sich im Bereich einer zweiten Seite (29) der Karte (20) befindet, wobei diese zweite Seite (29) zur ersten Seite (23) entgegengesetzt ist.

7. Chipkarte (20) nach einem der vorhergehenden Ansprüche, wobei jedes Loch mittels Laserperforation hergestellt ist.

## Claims

1. A smart card (20) comprising a card body (21) having a cavity (22) and an electronic module (1) having at least one portion (19) presenting thickness that is less than the thickness of the card body, the electronic module (1) being housed in the cavity (22) and being secured to the card body (21), wherein the smart card includes at least one through hole (27, 28) that includes a portion passing through the portion (19) of the module (1) that presents a thickness that is less than the thickness of the card body (21), and a portion that passes through the card body (21).

2. A smart card (20) according to claim 1, wherein the module (1) includes an electrical contact area (4) and a unit (2) including a processor associated with memory means, said unit (2) being fitted to a central region of one of the faces of the electrical contact area (4), and wherein each through hole (27, 28) passes through a portion of the module (1) corresponding to a peripheral region of the electrical contact area (4).

3. A smart card (20) according to claim 1 or 2, including a plurality of holes (27, 28) together defining one or more patterns (32-36, 39-43).

4. A smart card (20) according anyone of claim 1 to 3, including a first series (31) of patterns (32-36) relating to the manufacturer of the smart card (20) and/or a second series of patterns specific to the particular smart card (20).

5. A smart card (20) according anyone of the preceding claims, wherein each hole (27, 28) has a flared shape presenting a section of dimensions that increase from one end of the hole (27, 28) to the other.

6. A smart card (20) according to claim 5, including at least one flared hole (27) of smaller-dimension section situated in a first face (23) of the card (20), and at least one other flared hole (28) having its smaller-dimension section situated in a second face (29) of the card (20), said second face (29) being opposite from the first face (23).

7. A smart card (20) according anyone of the preceding claims, wherein each hole is made by laser perforation.
